# EUROPEAN PATENT APPLICATION

(11) **EP 3 426 006 A1**
(43) Date of publication of application: **09.01.2019**
(21) Application number: 18178637.7
(22) Date of filing: 19.06.2018
(51) Int. Cl.: H05B 33/08

(54) **LED LAMP**

(30) Priority: 07.07.2017 CN 201710549857; 07.07.2017 CN 201720816795 U
(71) Applicant: Xiamen PVTECH Co., Ltd., Xiamen Fujian (CN)
(72) Inventor: LU, FUXING, Xiamen, Fujian (CN); LIU, RONGTU, Xiamen, Fujian (CN)
(74) Representative: Lang, Christian

(57) **Abstract**

A multi-input LED lamp, which has two ends having two conductive pin modules, respectively. Each conductive pin module has two pins. The LED lamp includes a LED module, a conversion module and a voltage scaling module. The conversion module comprises two voltage conversion apparatuses. Each voltage conversion apparatus is connected to the conductive pin module. Two selective pins among the pins of the conductive pin modules can be used for receiving an input power. The input power passes through one of the voltage conversion apparatus, be processed with a currency conversion by the voltage scaling module and transmitted to the LED module. Therefore, the multi-input LED lamp in accordance with present invention is adapted to multiple power supply manner.

## Description

### Background of the Invention

### 1. Field of the Invention

The present invention relates to a LED lamp, and more particularly to a multi-input LED lamp.

### 2. Description of the Prior Art

With the development of LED technology, the applications of which are widely implemented. The early aged traditional fluorescent illumination used for lighting (such as fluorescent lamp), are with drawbacks of shorter working time, causing environmental pollution due to the mercury in damaged lamps. Therefore, light tubes applying LEDs as light source are currently becoming wide accepted.

At present, the LED lamps on the market, are typically requiring accommodated lamp holders corresponding to different ones, this lead to an unclearness of standards of LED lamps and lamp holders corresponding thereto. In general, the current common led lamp can simply categorized into: one-end power input or two-ends power input. With such, LED lamps with two-ends power input should be configured to lamp holder with two-ends power supply, so does one-end power input LED lamp. This condition causes an inconvenience that replaced new LED lamp may not fit with present lamp holder accommodating to the old LED lamp. So, how to solve the problem of lamp fitness, becomes an important question that the relevant industry must think about.

### Summary of the Invention

An object of the invention is to provide a LED lamp that is adapted to multiple power supply manner, which effectively resolves the unfitness problems in traditional LED lamp with un-unified standards. The LED lamp comprises two ends having conductive pin modules, respectively, and two voltage conversion apparatuses connected respectively to each conductive pin module in two ends of the LED lamp. Each of the conductive pin modules has two pins. Selectively, two pins among the pins of all conductive pin modules are selectively connected to an external power source for receiving power input (such as AC voltage power). A currency of the external power source therefore passes through selective one of the voltage conversion apparatuses (such as bridge rectifier). The voltage scaling module processes a currency conversion and the currency is transmitted to the LED module. Therefore, the LED lamp in accordance with present invention is accommodating with lamp holders with one-end power supply and two-end power supply, effectively resolves the problem of lamp fitness.

The invention provides a multi-input LED lamp. Two ends of the LED lamp have two conductive pin modules, respectively. Each conductive pin module comprises two pins. The LED lamp has a LED module, a conversion module and a voltage scaling module mounted therein. The conversion module comprises two voltage conversion apparatuses. Each voltage conversion apparatus connects to the conductive pin module. Selective two of the pins are connected to an external power source. A currency of the external power source therefore passes through selective one of the voltage conversion apparatuses. The voltage scaling module processes a currency conversion and the currency is transmitted to the LED module. Such that, the LED lamp in accordance with present invention is adapted to multiple power supply manner.

In one of the preferred embodiments, the LED lamp further comprises a housing for mounting the conductive pin module, the conversion module, the voltage scaling module and the LED module; and a lamp cover mounted on the housing for covering the LED module.

In one of the preferred embodiments, said LED lamp is T-type lamp.

In one of the preferred embodiments, said T-type lamp is T8, T10 or T12 style.

In one of the preferred embodiments, said voltage conversion apparatus is rectifier.

In one of the preferred embodiments, said rectifier is bridge rectifier.

In one of the preferred embodiments, said external power source is AC power source.

Meanwhile, the multi-input LED lamp of the invention provides a convenience when replacing traditional fluorescent lamps with LED lamps (T8, T10 or T12). To do the replacement, just need to take off the traditional fluorescent lamps and starters thereof, and mount in the LED lamp of the invention. As for electronic rectifier driven lamp, users can simply do the lamp replacement.

For the detailed features of the preferred embodiment, is hereby illustrated with the following detailed description of its contents is sufficient to enable any person skilled in the relevant art to understand the technical content of the invention and according to implement, and in accordance with this specification and drawings reveal the contents of any person skilled in the relevant art can easily understand the foregoing objects and advantages.

### Brief Description of the Drawings

Fig. 1 is a perspective view of the LED lamp in accordance with the invention.
Fig. 2 is a schematic diagram of the LED lamp in accordance with the invention.
Fig. 3 is an another schematic diagram of the LED lamp in accordance with the invention.
Fig. 4 is a block diagram of the LED lamp in accordance with the invention.
Fig. 5 is a block diagram of the LED lamp corresponding to Fig. 2.
Fig. 6 is a schematic diagram of the LED lamp corresponding to Fig. 3.

### Detailed Description

A more complete appreciation of the invention, and many of the attendant advantages thereof, will be readily apparent as the same become better understood by reference to the following detailed description when considered in conjunction with the accompanying drawings. It is to be understood that, the described embodiment is intend to further illustrate the invention for better understanding, and are not intended to limit the scope of the invention.

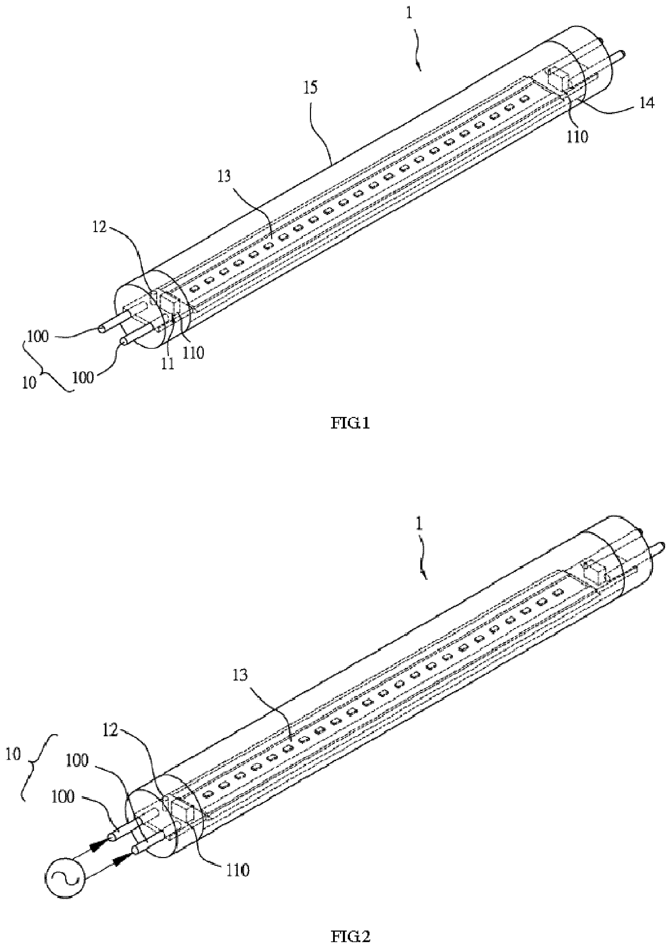

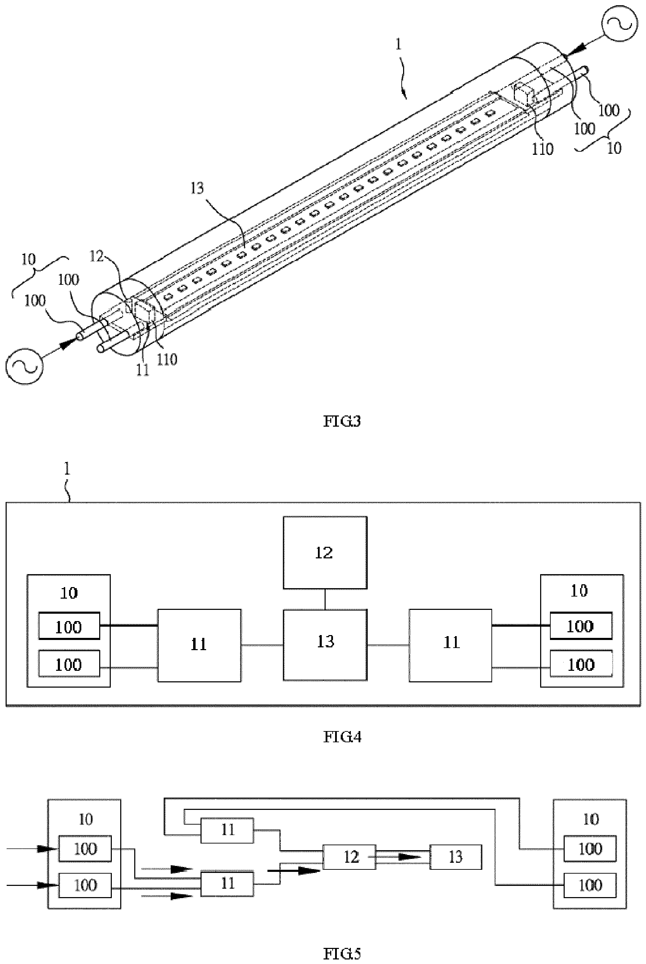

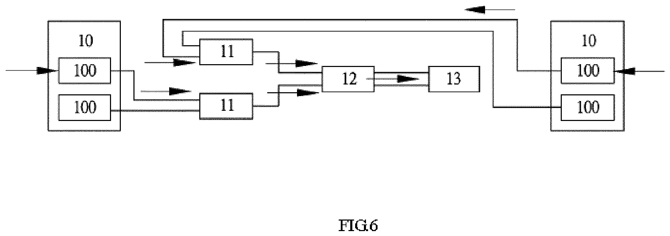

With reference to Fig. 1 to Fig. 6, the multi-input LED lamp in accordance with the invention is adapted to multiple power supply manner. Effectively resolves the problems of traditional LED lamp with un-unified standards and fit the condition of one-end input power supply to the lamp.

The following drawings will be described in detail with illustrative embodiments. However, these embodiments may be included in different forms and should not be construed to limit the scope of the present invention. These embodiments are provided so that the disclosure of the present invention with complete apparent to those skilled in the art will be able to understand the scope of the invention through the embodiments described.

With reference to Fig. 1 to Fig. 6, the LED lamp 1 further comprises a housing 14 and a lamp cover 15. The housing 14 is for securing the conductive pin modules 10, the conversion modules 11, the voltage scaling modules 12 and the LED module 13. The lamp cover 15 is mounted on the housing 14 for covering the LED module 13. The LED lamp 1 of the invention is T-type lamp (T8, T10, T12).

With reference to Fig. 1 to Fig. 6, which illustrates an example of end-end power input through the pin 100 (the arrow direction is the transition direction of the current). When the LED lamp 1 mounted in an external lamp holder with one-end power supply, the conductive pin module 10 in the corresponding end connects and receives the input power (such as AC voltage power) of the external lamp holder.

With reference to Fig. 1 to Fig. 6, the voltage conversion apparatus 110 (bridge rectifier) connects to the conductive pin modules 10 in one end (two pins 100), the voltage scaling modules 12 electronically connect to the conversion modules 11 to convert the AC voltage power into a DC voltage power. The LED module 13 electronically connects to voltage scaling module 12 to receive DC voltage power. Selective two of the pins 100 are connected to an external power source. A currency of the external power source therefore passes through selective one of the voltage conversion apparatuses 110. The voltage scaling module 12 processes a currency conversion and the currency is transmitted to the LED module 13.

With reference to Fig. 1 to Fig. 6, a currency of the external power source input via selective two the pins therefore processed with voltage conversion apparatuses (such as bridge rectifier) to provide pulse DC voltage power to the voltage scaling module 12 and the LED module 13.

With reference to Fig. 1 to Fig. 6, the invention is a multi-input LED lamp, which connects to an external power source (AC power), the LED lamp 1 comprises two conductive pin modules 10, two conversion modules 11, a voltage scaling module 12 and a LED module 13.

With reference to Fig. 1 to Fig. 6, each conductive pin module 10 comprises two pins 100, conversion module 11 comprises two voltage conversion apparatus 110(could be bridge rectifiers of rectifier), each voltage conversion apparatus 110 connects to the conductive pin module 10.

With reference to Fig. 1 to Fig. 6, the voltage scaling module 12 electronically connects to the conversion module 11 to convert the AC voltage power into DC voltage power. The LED module 13 electronically connects to the voltage scaling module 12 to receive voltage power. Two of the pins 100 receive the external power source. A currency of the external power source therefore passes through selective one of the voltage conversion apparatuses 110. Such, the voltage scaling module 12 performs a currency conversion, and the input power is transmitted to LED module 13.

With reference to Fig. 1 to Fig. 6, the invention provides a convenience when replacing traditional fluorescent lamps with the LED lamp (T8, T10, T12). To do the replacement, just need to take off the traditional fluorescent lamps and starters thereof, and mount in the LED lamp of the invention. As for electronic rectifier driven lamp, users can simply do the lamp replacement.

With reference to Fig. 1 to Fig. 6, in case of lamp with two pins 100 in two ends thereof (Arrow direction is the currency transmission direction). When install the LED lamp 1 in the external lamp holder, each pin 100 in two ends connect to the external power source (AC power) of the external lamp holder.

With reference to Fig. 1 to Fig. 6, each voltage conversion apparatus 110 (bridge rectifier) connect respectively to each pin 100 of the conductive pin module 10. The voltage scaling module 12 electronically connects to the conversion module 11 to convert the AC voltage power into a DC voltage power.

With reference to Fig. 1 to Fig. 6, the LED module 13 electronically connects to the voltage scaling module 12 to receive DC voltage power, uses each pin 100 of the conductive pin module 1 in two ends to receive external power source. A currency passes through one of the voltage conversion apparatuses 110, such that the voltage scaling module 12 performs a currency conversion and the input power is transmitted to LED module 13.

With reference to Fig. 1 to Fig. 6, present invention allows the AC voltage power to be input from any two of the pins and be rectified completely by the voltage conversion apparatus 110 (bridge rectifier), so as to provide pulse DC voltage power to the voltage scaling module 12 and the LED module 13.

The invention provides a multi-input LED lamp, effectively resolves the unfitness problems in traditional LED lamp with un-unified standards. This not only allows one-end or two-end power input for lamp, but also resolves problems caused by un-unified standards issue.

Meanwhile, the multi-input LED lamp of the invention provides a convenience when replacing traditional fluorescent lamps with LED lamps (T8, T10 or T12). To do the replacement, just need to take off the traditional fluorescent lamps and starters thereof, and mount in the LED lamp of the invention. As for electronic rectifier driven lamp, users can simply do the lamp replacement.

So, the advantages and features of the present invention thereof reach the exemplary embodiments with reference to the accompanying drawings and described in more detail below and more readily understood. However, the present invention may be implemented in different forms and should not be construed limited to embodiments set forth herein.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A multi-input LED lamp, **characterized in that**:
two ends having two conductive pin modules, respectively, each conductive pin module has two pins;
a LED module;
a conversion module comprising two voltage conversion apparatuses, each voltage conversion apparatus be connected to the conductive pin module; and
a voltage scaling module being adapted to perform a currency conversion;
wherein two of the pins of the conductive pin modules are selectively connected to an external power source;
a currency of the external power source passes through selective one of the voltage conversion apparatuses; and
the voltage scaling module processes a currency conversion and the currency being transmitted to the LED module.

2. The multi-input LED lamp as claimed in claim 1, **characterized in that** the voltage conversion apparatuses are rectifiers.

3. The multi-input LED lamp as claimed in claim 1, **characterized in that** the multi-input LED lamp further comprising:
a housing for mounting the conductive pin module, the conversion module, the voltage scaling module and the LED module; and
a lamp cover mounted on the housing for covering the LED module.

4. The multi-input LED lamp as claimed in claim 3, **characterized in that** the LED lamp is T-type lamp.

5. The multi-input LED lamp as claimed in claim 4, **characterized in that** the T-type lamp is T8, T10 or T12 style.

6. The multi-input LED lamp as claimed in claim 3, **characterized in that** the rectifier is bridge rectifier.

7. The multi-input LED lamp as claimed in claim 1, **characterized in that** the external power source is AC power source.
